# EUROPEAN PATENT SPECIFICATION

(11) **EP 1 303 107 B1**
(45) Date of publication and mention of the grant of the patent: **12.12.2007**
(21) Application number: 02022446.5
(22) Date of filing: 04.10.2002
(51) Int. Cl.: H04L 29/12, H04L 29/06, H04L 12/18

(54) **System for multicast address allocation and information distribution**
System zur multicast adresszuweisung und Informationsverteilung
Système d'attribution d'addresse multidiffusion et de distribution des informations

(30) Priority: 04.10.2001 JP 2001309052; 16.11.2001 JP 2001352100
(43) Date of publication of application: 16.04.2003
(60) Divisional application: 07009508.8
(73) Proprietor: NTT DoCoMo, Inc., Tokyo 100-6150 (JP)
(72) Inventor: Watanabe, Yugo, Intel. Prop. Dpt., NTT DoCoMo Inc., Chiyoda-ku, Tokyo 100-6150 (JP); Kikuta, Yoko, Intel. Prop. Dpt., NTT DoCoMo Inc., Chiyoda-ku, Tokyo 100-6150 (JP); Yabusaki, Masami Intel. Prop. Dpt., NTT DoCoMo Inc, Chiyoda-ku, Tokyo 100-6150 (JP)
(74) Representative: GROSSE BOCKHORNI SCHUMACHER

(56) References cited:
- WO-A-00/51373
- WO-A-00/57601
- XYLOMENOS G ET AL: "IP multicasting for wireless mobile hosts" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, 21 October 1996 (1996-10-21), pages 933-937, XP010204037 ISBN: 0-7803-3682-8

## Description

### BACKGROUND OF THE INVENTION

### Field of the Invention

The present invention relates to a multicast address allocation apparatus, a multicast address allocation method, and a multicast address allocation program for allocating a multicast address in order to implement multicast transmissions of information to a plurality of mobile terminals, this information being relayed by a plurality of base stations, and also relates to an information distribution apparatus, an information distribution system, an information distribution method and an information distribution program for performing multicast transmissions by using this multicast address allocation method, and to a computer-readable recording medium for recording a multicast address allocation program or an information distribution program.

### Related Background art

Conventionally, in a mobile communications system that is constituted by a plurality of base stations and a plurality of mobile terminals in the communication ranges of this plurality of base stations, push-type information distribution services for distributing information such as advertisements, news, and traffic information, for example, to mobile terminals have been provided. Furthermore, the use of multicast technology in such push-type information distribution services has been proposed.

### SUMMARY OF THE INVENTION

However, the multicast technology being proposed at present has been confronted by the problem outlined below. Generally, in amobile communications network, the locations of non-communicating mobile terminals are managed in location registration area units but such management does not extend to a determination of which base station communication ranges the mobile terminals are located in. Consequently, there has been the problem that, when making multicast transmissions, it is necessary to perform information distribution to all of the base stations in a location registration area, and, when performing information distribution by means of such a method, information is also distributed to base stations where those mobile terminals which are the distribution targets are not located, which results in the generation of unnecessary traffic. A multicast architecture using IP Multicast, which solves similar problems for Internet Protocol packets is described in WO 00/51373.

The present invention accordingly resolves the above problem, an object thereof being to provide: an information distribution apparatus, information distribution system, information distribution method, and information distribution program that realizes efficient information distribution; a multicast address allocation apparatus, multicast address allocation method and multicast address allocation program for the implementation of the information distribution apparatus, information distribution system, information distribution method and information distribution program; and a computer-readable recording medium for recording the information distribution program or multicast address allocation program.

A multicast address allocation apparatus according to the present invention is a multicast address allocation apparatus that allocates a multicast address in order to implement multicast transmissions of information to a plurality of mobile terminals, this information being relayed by a plurality of base stations, comprising: mobile terminal information storage means for storing location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information stored by the mobile terminal information storage means; and multicast address allocation means for allocating a multicast address to the distribution target terminals extracted by the distribution target terminal extraction means.

An efficient multicast group can thus be formed as a result of the extraction, by the distribution target terminal extraction means, of the mobile terminals which match the conditions of the designation information which is transmitted by the information supply terminal.

A further multicast address allocation apparatus according to the present invention is a multicast address allocation apparatus that allocates a multicast address in order to implement multicast transmissions of information to a plurality of mobile terminals, this information being relayed by a plurality of base stations, comprising: mobile terminal information acquisition means for acquiring mobile terminal information by requesting mobile terminal information from mobile terminal information storage means that store location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information acquired by the mobile terminal information acquisition means; and multicast address allocation means for allocating a multicast address to the distribution target terminals extracted by the distribution target terminal extraction means.

An efficient multicast group can thus be formed as a result of the extraction, by the distribution target terminal extraction means, of the mobile terminals which match the conditions of the designation information which is transmitted by the information supply terminal.

In the above multicast address allocation apparatus, the mobile terminal information storage means preferably store, as the location information, location area information indicating the areas in which the mobile terminals are located.

An information distribution apparatus according to the present invention is an information distribution apparatus for performing multicast transmissions of information to a plurality of mobile terminals, this information being relayed by a plurality of base stations, comprising: the multicast address allocation apparatus; paging signal processing means for transmitting a paging signal, which has a multicast address allocated by the multicast address allocation apparatus added thereto, to the areas in which the distribution target terminals extracted by the distribution target terminal extraction means are located, and for receiving participation confirmation signals which are transmitted by the mobile terminals via the base stations in response to the paging signal and which indicate participation in a multicast group; and information distribution means, which, when participation confirmation signals are received by the paging signal processing means, distribute information, via the base stations relaying the participation confirmation signals, to the mobile terminals transmitting the participation confirmation signals.

The paging signal processing means is therefore capable of allocating a multicast address at the same time as a paging signal by making a transmission after adding a multicast address to a paging signal which pages the mobile terminals which are the targets of the information distribution. Furthermore, because the paging signal processing means transmit a paging signal to those areas in which the distribution target terminals are located but do not transmit a paging signal to the remaining areas, the traffic on the mobile communications network can be reduced. Moreover, the paging signal processing means receive participation confirmation signals for participation in a multicast group which are transmitted by the mobile terminals via base stations, which realizes the information distribution apparatus to specify the base stations relaying the participation confirmation signals, and to make multicast transmissions of information to only these base stations. Thus, unnecessary traffic can be reduced and efficient information distribution can be realized because information is not transmitted to those base stations where the mobile terminals transmitting the participation confirmation signals for participation in the multicast group are not located. In a case where a node linking a plurality of base stations is provided between the base stations and the information distribution apparatus, the participation confirmation signals can be transmitted to the information distribution apparatus via the base stations and this node. In such a case, because the node specifies the base stations relaying the participation confirmation signals, assuming that the information distribution apparatus specifies the node relaying the participation confirmation signals, unnecessary traffic can be reduced even if the base stations themselves are not specified.

An information distribution system according to the present invention is an information distribution system for performing multicast transmissions of information to a plurality of mobile terminals, comprising: a plurality of mobile terminals; a plurality of base stations for relaying the transmission and receipt of information between the mobile terminals; and the information distribution apparatus, wherein the mobile terminals each comprise paging signal receiving means for receiving a paging signal which has a multicast address added thereto; and participation confirmation signal transmitting means for transmitting a participation confirmation signal indicating participation in a multicast group in response to the paging signal thus received by the paging signal receiving means.

Therefore, because the mobile terminals each comprise participation confirmation signal transmitting means for transmitting a participation confirmation signal indicating participation in a multicast group in response to a paging signal that has multicast address information added thereto, the mobile terminals which participate in the multicast group are capable of transmitting a participation confirmation signal. By means of such participation confirmation signals, the information distribution apparatus is capable of specifying in which base station communication ranges the mobile terminals constituting the targets of the information distribution are located.

A multicast address allocation method according to the present invention is a multicast address allocation method that allocates a multicast address in order to implement multicast transmissions of information to a plurality of mobile terminals, this information being relayed by a plurality of base stations, in which mobile terminal information storage means are made to store in advance, as mobile terminal information, location information on the mobile terminals, and registration information that is preset by the users of the mobile terminals, wherein the information distribution method comprises: a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information stored by the mobile terminal information storage means; and a multicast address allocation step of allocating a multicast address to the distribution target terminals extracted in the distribution target terminal extraction step.

An efficient multicast group can thus be formed as a result of the extraction, in the distribution target terminal extraction step, of themobile terminals whichmatch the conditions of the designation information which is transmitted by the information supply terminal.

A further multicast address allocation method according to the present invention is a multicast address allocation method that allocates a multicast address in order to implement multicast transmissions of information to a plurality of mobile terminals, this information being relayed by a plurality of base stations, comprising: amobile terminal information acquisition step of acquiring mobile terminal information by requesting mobile terminal information from mobile terminal information storage means that store location information on the mobile terminals, and registration information that is preset by the users of the mobile terminals, as mobile terminal information; a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information acquired in the mobile terminal information acquisition step; and a multicast address allocation step of allocating a multicast address to the distribution target terminals extracted in the distribution target terminal extraction step.

An efficient multicast group can thus be formed as a result of the extraction, in the distribution target terminal extraction step, of the mobile terminals which match the conditions of the designation information that is transmitted by the information supply terminal.

In the above multicast address allocation method, the mobile terminal information storage means preferably store, as the location information, location area information indicating the areas in which the mobile terminals are located.

An information distribution method according to the present invention is an information distribution method for performing multicast transmissions of information to a plurality of mobile terminals, this information being relayed by a plurality of base stations, in which mobile terminal information storage means are made to store in advance, as mobile terminal information, location information on the mobile terminals, and registration information that is preset by the users of the mobile terminals, wherein the information distribution method comprises: a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information stored by the mobile terminal information storage means; a multicast address allocation step of allocating a multicast address to the distribution target terminals extracted in the distribution target terminal extraction step; a paging signal processing step of transmitting a paging signal, which has the multicast address allocated in the multicast address allocation step added thereto, to the areas in which the distribution target terminals extracted in the distribution target terminal extraction step are located, and of receiving participation confirmation signals which are transmitted by the mobile terminals via the base stations in response to the paging signal and which indicate participation in amulticast group; and an information distribution step of distributing information, via the base stations relaying the participation confirmation signals, to the mobile terminals transmitting the participation confirmation signals, when participation confirmation signals are received in the paging signal processing step.

The paging signal processing step thus realizes allocation of a multicast address at the same time as a paging signal by making a transmission after adding a multicast address to a paging signal that pages the mobile terminals which are the targets of the information distribution. Furthermore, in the paging signal processing step, a paging signal is transmitted to those areas in which the distribution target terminals are located but not to the remaining areas, meaning that the traffic on the mobile communications network can be reduced. Moreover, in the paging signal processing step, because participation confirmation signals for participation in a multicast group which are transmitted by the mobile terminals via base stations are received, it is possible to specify the base stations relaying the participation confirmation signals and to make multicast transmissions of information to only the sebases tations. Thus, unnecessary traffic can be reduced and efficient information distribution can be realized because information is not transmitted to those base stations where the mobile terminals transmitting the participation confirmation signals for participation in the multicast group are not located. In a case where a node linking a plurality of base stations is provided between the base stations and the information distribution apparatus, the participation confirmation signals can be transmitted to the information distribution apparatus via the base stations and this node. In such a case, because the node specifies the base stations relaying the participation confirmation signals, assuming that the information distribution apparatus specifies the node relaying the participation confirmation signals, unnecessary traffic can be reduced even if the base stations themselves are not specified.

A further information distribution method according to the present invention is an information distribution method for performing multicast transmissions of information to a plurality of mobile terminals, this information being relayed by a plurality of base stations, comprising: a mobile terminal information acquisition step of acquiring mobile terminal information by requesting mobile terminal information from mobile terminal information storage means that store location information on the mobile terminals, and registration information that is preset by the users of the mobile terminals, as mobile terminal information; a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information acquired in the mobile terminal information acquisition step; a multicast address allocation step of allocating a multicast address to the distribution target terminals extracted in the distribution target terminal extraction step; a paging signal processing step of transmitting a paging signal, which has the multicast address allocated in the multicast address allocation step added thereto, to the areas in which the distribution target terminals extracted in the distribution target terminal extraction step are located, and of receiving participation confirmation signals which are transmitted by the mobile terminals via the base stations in response to the paging signal and which indicate participation in a multicast group; and an information distribution step of distributing information, via the base stations relaying the participation confirmation signals, to the mobile terminals transmitting the participation confirmation signals, when participation confirmation signals are received in the paging signal processing step.

The paging signal processing step thus realizes allocation of a multicast address at the same time as a paging signal by making a transmission after adding a multicast address to a paging signal which pages the mobile terminals which are the targets of the information distribution. Furthermore, in the paging signal processing step, a paging signal is transmitted to those areas in which the distribution target terminals are located but not to the remaining areas, meaning that the traffic on the mobile communications network can be reduced. Moreover, in the paging signal processing step, because participation confirmation signals for participation in a multicast group which are transmitted by the mobile terminals via base stations are received, it is possible to specify the base stations relaying the participation confirmation signals and to make multicast transmissions of information to only these base stations. Thus, unnecessary traffic canbe reduced and efficient information distribution can be realized because in for mation is not transmitted to those base stations where the mobile terminals transmitting the participation confirmation signals for participation in the multicast group are not located. In a case where a node linking a plurality of base stations is provided between the base stations and the information distribution apparatus, the participation confirmation signals can be transmitted to the information distribution apparatus via the base stations and this node. In such a case, because the node specifies the base stations relaying the participation confirmation signals, assuming that the information distribution apparatus specifies the node relaying the participation confirmation signals, unnecessary traffic can be reduced even if the base stations themselves are not specified.

A multicast address allocation program according to the present invention which, in order to allocate amulticast address for implementing multicast transmissions of information to a plurality of mobile terminals, this information being relayed by a plurality of base stations, causes a computer to function as : mobile terminal information storage means for storing location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information stored by the mobile terminal information storage means; and multicast address allocation means for allocating a multicast address to the distribution target terminals extracted by the distribution target terminal extraction means.

An efficient multicast group can thus be formed as a result of the multicast address allocation program according to the present invention causing a computer to function as distribution target terminal extraction means to thereby extract the mobile terminals which match the conditions of the designation information which is transmitted by the information supply terminal.

A further multicast address allocation program according to the present invention which, in order to allocate a multicast address for implementing multicast transmissions of information to a plurality of mobile terminals, this information being relayed by a plurality of base stations, causes a computer to function as: mobile terminal information acquisition means for acquiring mobile terminal information by requesting mobile terminal information from mobile terminal information storage means that store location information on the mobile terminals, and registration information that is preset by the users of the mobile terminals, as mobile terminal information; distribution target terminal extraction means for receiving designation information for designating the mobile terminals to which information is to be distributed, this designation information being tran smitted by an information supply terminal, and for extracting the mobile terminals which match the conditions of the received designation information on the basis of the mobile terminal information acquired by the mobile terminal information acquisition means; and multicast address allocation means for allocating a multicast address to the distribution target terminals extracted by the distribution target terminal extraction means.

An efficient multicast group can thus be formed as a result of the multicast address allocation program according to the present invention causing a computer to function as distribution target terminal extraction means to thereby extract the mobile terminals which match the conditions of the designation information which is transmitted by the information supply terminal.

The above multicast address allocation program preferably causes a computer, which functions as mobile terminal information storage means, to store location area information indicating the areas in which the mobile terminals are located, as the location information.

An information distribution program according to the present invention which, in order to perform multicast transmissions of information to a plurality of mobile terminals, this information being relayed by a plurality of base stations, causes a computer to function as: mobile terminal information storage means for storing location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information from the mobile terminal information storage means; multicast address allocation means for allocating a multicast address to the distribution target terminals extracted by the distribution target terminal extraction means; paging signal processing means for transmitting a paging signal, which has a multicast address allocated by the multicast address allocationmeans added thereto, to the areas in which the distribution target terminals extracted by the distribution target terminal extraction means are located, and for receiving participation confirmation signals which are transmitted by the mobile terminals via the base stations in response to the paging signal and which indicate participation in a multicast group; and information distribution means, which, when participation confirmation signals are received by the paging signal processing means, distribute information, via the base stations relaying the participation confirmation signals, to themobile terminals transmitting the participation confirmation signals.

By means of the program according to the present invention, allocation of a multicast address at the same time as a paging signal is possible by causing a computer to function as the paging signal processing means to thereby make a transmission after adding a multicast address to a paging signal which pages the mobile terminals which are the targets of the information distribution. Furthermore, the paging signal processing means transmit a paging signal to those areas in which the distribution target terminals are located but not to the remaining areas, meaning that the traffic on the mobile communications network can be reduced. Moreover, as a result of the paging signal processing means being made to receive participation confirmation signals for participation in a multicast group which are transmitted by the mobile terminals via base stations, the computer can be made to specify the base stations relaying the participation confirmation signals, and can be made to make multicast transmissions of information to only these base stations. Thus, unnecessary traffic can be reduced and efficient information distribution can be realized because information is not transmitted to those base stations where the mobile terminals transmitting the participation confirmation signals for participation in the multicast group are not located. In a case where a node linking a plurality of base stations is provided between the base stations and the computer, the participation confirmation signals can be transmitted to the computer via the base stations and this node. In such a case, because the node specifies the base stations relaying the participation confirmation signals, assuming that the program according to the present invention causes a computer to specify the node relaying the participation confirmation signals, unnecessary traffic can be reduced even if the base stations themselves are not specified.

A further information distribution program according to the present invention which, in order to perform multicast transmissions of information to a plurality of mobile terminals, this information being relayed by a plurality of base stations, causes a computer to function as: mobile terminal information acquisition means for acquiring mobile terminal information by requesting mobile terminal information from mobile terminal information storage means that store location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information acquired by the mobile terminal information acquisition means; multicast address allocation means for allocating a multicast address to the distribution target terminals extracted by the distribution target terminal extraction means; paging signal processing means for transmitting a paging signal, which has the multicast address allocated by the multicast address allocation means added thereto, to the areas in which the distribution target terminals extracted by the distribution target terminal extraction means are located, and for receiving participation confirmation signals which are transmitted by the mobile terminals via the base stations in response to the paging signal and which indicate participation in a multicast group; and information distribution means, which, when participation confirmation signals are received by said paging signal processing means, distribute information, via the base stations relaying said participation confirmation signals, to the mobile terminals transmitting the participation confirmation signals

By means of the program according to the present invention, allocation of a multicast address at the same time as a paging signal is possible by causing a computer to function as the paging signal processing means to thereby make a transmission after adding a multicast address to a paging signal which pages the mobile terminals which are the targets of the information distribution. Furthermore, the paging signal processing means transmit a paging signal to those areas in which the distribution target terminals are located but not to the remaining areas, meaning that the traffic on the mobile communications network can be reduced. Moreover, as a result of the paging signal processing means being made to receive participation confirmation signals for participation in a multicast group which are transmitted by the mobile terminals via base stations, the computer can be made to specify the base stations relaying the participation confirmation signals, and can be made to make multicast transmissions of information to only these base stations. Thus, unnecessary traffic can be reduced and efficient information distribution can be realized because information is not transmitted to thosebase stations where the mobile terminals transmitting the participation confirmation signals for participation in the multicast group are not located. In a case where a node linking a plurality of base stations is provided between the base stations and the computer, the participation confirmation signals can be transmitted to the computer via the base stations and this node. In such a case, because the node specifies the base stations relaying the participation confirmation signals, assuming that the program according to the present invention causes a computer to specify the node relaying the participation confirmation signals, unnecessary traffic can be reduced even if the base stations themselves are not specified.

A computer-readable recording medium according to the present invention records the above-mentioned multicast address allocation program or information distribution program.

Due to the fact that the above recording medium, which records the multicast address allocation program or information distribution program, realizes a program to be read and executed by a computer, it is possible to implement efficient multicast address allocation and information distribution as described above.

The present invention will become more fully understood from the detailed description given hereinbelow and the accompanying drawings which are given by way of illustration only, and thus are not to be considered as limiting the present invention.

Farther scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a constitutional view of the information distribution system according to a first embodiment;
Fig. 2 shows an example of data that is stored by a mobile terminal information database;
Fig. 3 shows an example of data that is stored in a conversion table;
Fig. 4 is a flowchart showing the operation of the information distribution system according to the first embodiment;
Fig. 5 is a constitutional view of the information distribution system according to a second embodiment;
Fig. 6 is a constitutional view of a recording medium according to the first embodiment;
Fig. 7 is a constitutional view of a computer system according to the first embodiment;
Fig. 8 is a perspective view of a computer according to the first embodiment; and
Fig. 9 is a constitutional view of a recording medium according to the second embodiment.

### DETAILED DESCRIPTION OF THE PREFERRED EMBODIMENTS

### (First embodiment)

A detailed description for a preferred embodiment of an information distribution system according to the present invention as well as for the accompanying drawings will be provided below. In the description of the drawings, the same elements have been assigned the same reference numerals, and therefore a repetitive description of such elements is omitted here.

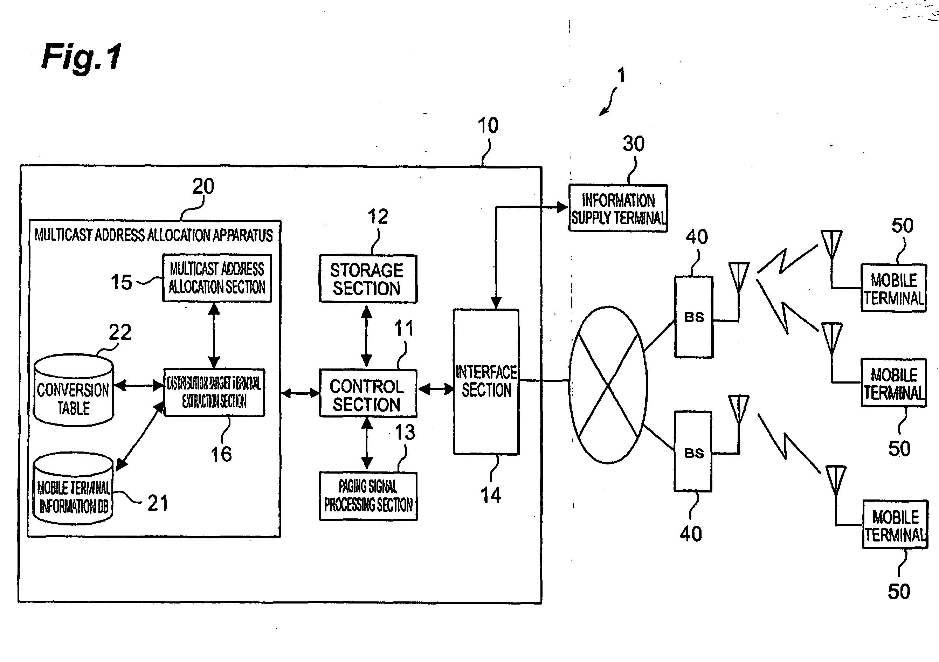

Fig. 1 is a block diagram showing the information distribution system 1 according to an embodiment of the present invention. The information distribution system 1 comprises a plurality of mobile terminals 50; base stations (BS) 40 for relaying the transmission and receipt of information between the mobile terminals 50; an information supply terminal 30 which is the supply source for information (referred to as "distribution information" or "distribution data" hereinafter) which is multicast-transmitted to the mobile terminals 50; and an information distribution apparatus 10 for distributing information supplied by the information supply terminal 30 to designated mobile terminals 50.

The information distribution apparatus 10 comprises a control section 11 for controlling the information distribution apparatus 10 as a whole; an interface section 14 for communications with the information supply terminal 30 and the base stations 40; a storage section 12 for temporarily storing distribution information; a paging signal processing section 13 for processing a paging signal for paging the mobile terminals 50; and a multicast address allocation apparatus 20 for allocating a multicast address to the mobile terminals 50 which are the targets for the distribution of distribution information. Furthermore, the multicast address allocation apparatus 20 comprises a distribution target terminal extraction section 16; a conversion table 22 that is used by the distribution target terminal extraction section 16; a mobile terminal information database (referred to as "mobile terminal information DB" hereinafter) 21; and a multicast allocation section 15.

A description will be provided next for each of the elements that constitute the information distribution apparatus 10. The interface section 14 comprises a function for transmitting and receiving information. For example, the interface section 14 receives information, which is to be distributed to the mobile terminals 50, from the information supply terminal 30, and distributes the information to the mobile terminals 50 via the base stations 40. The interface section 14 also transmits a paging signal to the mobile terminals 50 and receives answer signals of the paging signals, which are transmitted by the mobile terminals 50.

The storage section 12 comprises a function for the temporary buffering of supplied distribution data which is transmitted by the information supply terminal 30.

The paging signal processing section 13 comprises a function for generating a paging signal which is transmitted to the mobile terminals 50, and a function for processing answer signal of the paging signal, which is transmitted by the mobile terminals 50. The paging signal generated by the paging signal processing section 13 has a multicast address added thereto, and answer signal of the paging signal, which contains a participation confirmation signal for participation in the multicast group. Here, "participation in the multicast group" is intended to mean that a mobile terminal 50 that transmits this answer receives, by means of a multicast transmission, information that is designated by a multicast address.

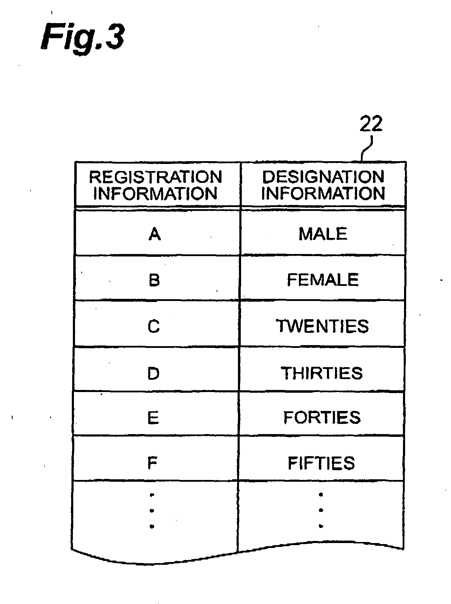

The conversion table 22 is a table that defines relationships between designation information that designates the mobile terminals 50 to which the information supply terminal 30 is to distribute information, and data for processing in the information distribution apparatus 10. In the information distribution system 1 of this embodiment, the conversion table 22 serves to realize compatibility even in cases where a difference exists between the format of information used by the information supply terminal 30 as designation information and the format of information used by the information distribution apparatus 10 as designation information. Fig. 3 shows an example of data that is stored in the conversion table 22. As shown in Fig. 3, the conversion table 22 contains the information "registration information" and "designation information". It can be seen that, according to the conversion table 22, the designation information "male" corresponds to the registration information "A", for example.

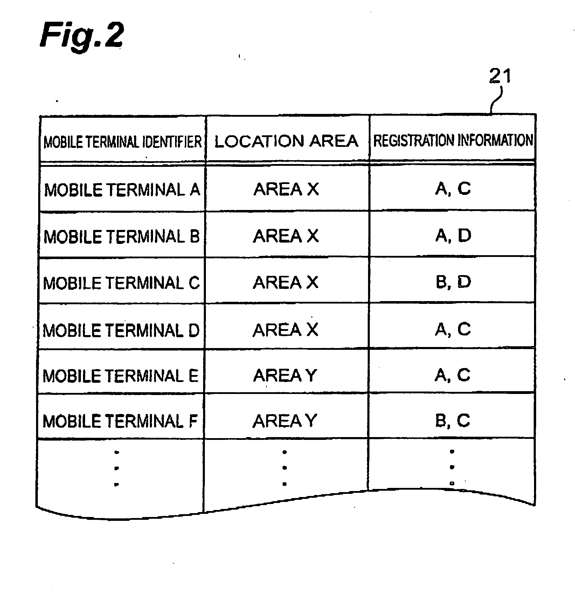

The mobile terminal information DB 21 stores information concerning the locations of the mobile terminals 50, as well as pre-registered registration information relating to the users of the mobile terminals 50. Fig. 2 shows an example of data that is stored by the mobile terminal information DB 21. As shown in Fig. 2, the mobile terminal information DB 21 stores the information "mobile terminal identifiers", "location area", and "registration information". The "mobile terminal identifiers" are identifiers that serve to identify the mobile terminals 50. When the mobile terminals 50 are cellular phones, the mobile terminal identifiers are preferably the telephone numbers of the cellular phones. The "location area" is location information that indicates in which area eachmobile terminal 50 is currently located. The "registration information" is information that relates to attributes and the like registered beforehand by the users who own the mobile terminals 50. The registration information is stored by the conversion table 22 using a specified encoding. For example, the registration information of the user of the mobile terminal A is "A" and "C", which represents the user information "male", and "in his twenties".

The distribution target terminal extraction section 16 uses data stored in the conversion table 22 to convert designation information which is transmitted by the information supply terminal 30 to an encoding for use in the processing in the information distribution apparatus 10, and then extracts the distribution target terminals by comparing the conversion result with information stored by the mobile terminal information DB 21.

The multicast address allocation section 15 comprises a function for allocating a multicast address to the mobile terminals 50 extracted by the distribution target terminal extraction section 16.

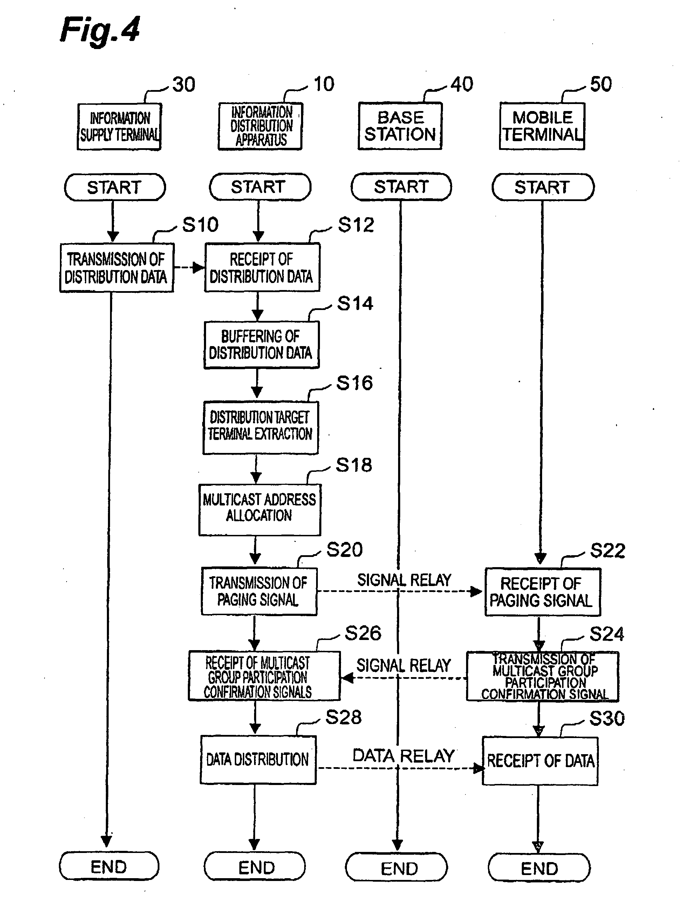

Next, a description will be provided with regard to the operation of the information distribution system 1 of this embodiment as well as a description of the information distribution method according to the embodiments of the present invention. Fig. 4 is a flowchart showing the operation of the information distribution system 1.

First, the information to be distributed is transmitted by the information supply terminal 30 to the information distribution apparatus 10 (S10). Thereupon, designation information for designating those mobile terminals 50 which are the targets of the information distribution is also transmitted along with the information to be distributed. Here, the designation information transmitted is "in his twenties" and "male". Upon receiving the distribution information which is transmitted by the information supply terminal 30 (S12), the information distribution apparatus 10 buffers the distribution information thus received in the storage section 12 (S14). Thereafter, the distribution target terminal extraction section 16 references the conversion table 22 to convert the received designation information to an encoding for use in the processing within the information distribution apparatus 10. Here, because the designation information is "in his twenties" and "male", the converted conditions are "A" and "C". Thereafter, the information distribution apparatus 10 handles the designation information "in his twenties" and "male" in this format.

Then, based on the converted conditions, the distribution target terminal extraction section 16 extracts the mobile terminals 50 which are the targets of the information distribution from the mobile terminal information DB 21 (S16), that is, extracts the mobile terminals 50 which match the converted conditions. Here, because "A" and "C" are conditions for the information distribution target terminals, referring to Fig. 2, the mobile terminals 50 which are extracted as the distribution target mobile terminals 50 are the mobile terminals A, D, and E. The multicast address allocation section 15 then allocates a multicast address to the extracted mobile terminals A, D, and E (S18).

The information distribution apparatus 10 then uses the paging signal processing section 13 to generate a paging signal for the mobile terminals 50 extracted as the distribution targets. Thereupon, the paging signal processing section 13 generates a paging signal that contains the multicast address. The information distribution apparatus 10 then transmits the paging signal via the interface section 14 (S20). Here, the base stations 40, which are the destinations of the transmitted paging signal, are those base stations 40 which are located in the areas in which the mobile terminals 50 that are the targets of the information distribution are located. Here, referring to Fig. 2, because the mobile terminals A and D are located in an area X, and the mobile terminal E is located in an area Y, the paging signal is transmitted to the base stations 40 in areas X and Y. The base stations 40 which receive the paging signal transmit the paging signal to all the mobile terminals 50 which are located in the communication ranges of these base stations 40.

Upon receiving the paging signal (S22), the mobile terminals 50 analyze the information contained in the paging signal to thereby judge whether or not these mobile terminals 50 are themselves page targets. When a given mobile terminal 50 judges itself to be a page target, this mobile terminal 50 sets the multicast address contained in the paging signal. In response to the paging signal, this mobile terminal 50 also transmits a participation confirmation signal confirming participation in a multicast group to the corresponding base station 40 (S24).

Upon receiving the participation confirmation signals transmitted by the target terminals, the base stations 40 transmit the participation confirmation signals to the information distribution apparatus 10. The information distribution apparatus 10 receives the transmitted participation confirmation signals from the base stations 40 bymeans of the interface section 14 (S26), and then processes the participation confirmation signals by means of the paging signal processing section 13. Through analysis of the participation confirmation signals transmitted by the base stations 40, the information distribution apparatus 10 is able to acquire information regarding the communication ranges of the base station 40 in which mobile terminals 50 that are the targets of the information distribution are located.

The information distribution apparatus 10 then extracts, from the storage section 12, the information which is buffered in the storage section 12 and which is to be multicast-distributed, and then transmits such information to the mobile terminals 50 which are the distribution targets (S28). Thereupon, by using the information on the base stations 40 where the mobile terminals 50 are located, this information having been acquired through receipt of the participation confirmation signals, the information distribution apparatus 10 then transmits information to only those base stations 40 where these mobile terminals 50 are located. The operation of the information distribution system 1 ends after the mobile terminals 50 have received the distributed information (S30).

The information distribution system 1 according to this embodiment thus realizes the formation of an efficient multicast group as a result of the extraction, by the distribution target terminal extraction section 16, of the mobile terminals 50 which match the conditions of the designation information that is transmitted by the information supply terminal 30. Also, as a result of generating a paging signal by adding multicast address information to the paging signal and of transmitting this paging signal, the mobile terminals 50 that receive this paging signal are able to immediately set the multicast address, which renders a sequence for setting the multicast address unnecessary, and allows the traffic on the mobile communications network to be reduced.

Furthermore, the mobile terminals 50 which receive the paging signal each transmit a participation confirmation signal for participation in the multicast group, which signal is an answer to the paging signal, to the information distribution apparatus 10 via the base stations 40. Consequently, the information distribution apparatus 10 is capable of acquiring information with regard to the communication ranges of the base station 40 I which mobile terminals 50 that are the targets of the information distribution are located. Moreover, because the information distribution apparatus 10 performs multicast transmissions of information to only those base stations 40 where the mobile terminals 50 which are the targets of the information distribution are located, there is no unnecessary data transmission to the base stations 40 where the mobile terminals 50 which are the targets of the information distribution are not located, whereby the traffic on the mobile communications network can be vastly reduced. In this embodiment, because a case where the information distribution apparatus 10 is directly connected to the base stations 40 is described, the information distribution apparatus 10 specifies the base stations 40 to which the information is to be distributed, by means of participation confirmation signals, and the information is distributed to only these base stations 40. However, with a constitution in which a node linking a plurality of base stations 40 is located between the base stations 40 and the information distribution apparatus 10, the information distribution apparatus 10 specifies the node to which information is to be distributed on the basis of the participation confirmation signals. Further, because this node specifies the base stations 40 to which the information is to be distributed, information can be distributed efficiently. The same is also true in a case where a plurality of nodes are located in the form of a tree between the base stations 40 and the information distribution apparatus 10. Information distribution can be performed efficiently as a result of the information distribution apparatus 10 or upper node specifying one lower node or base station 40 for information distribution.

Further, similarly to the above information distribution system 1, the information distribution method according to the present invention prevents unnecessary information distribution, which makes a reduction in the traffic on the mobile communications network feasible.

### (Second embodiment)

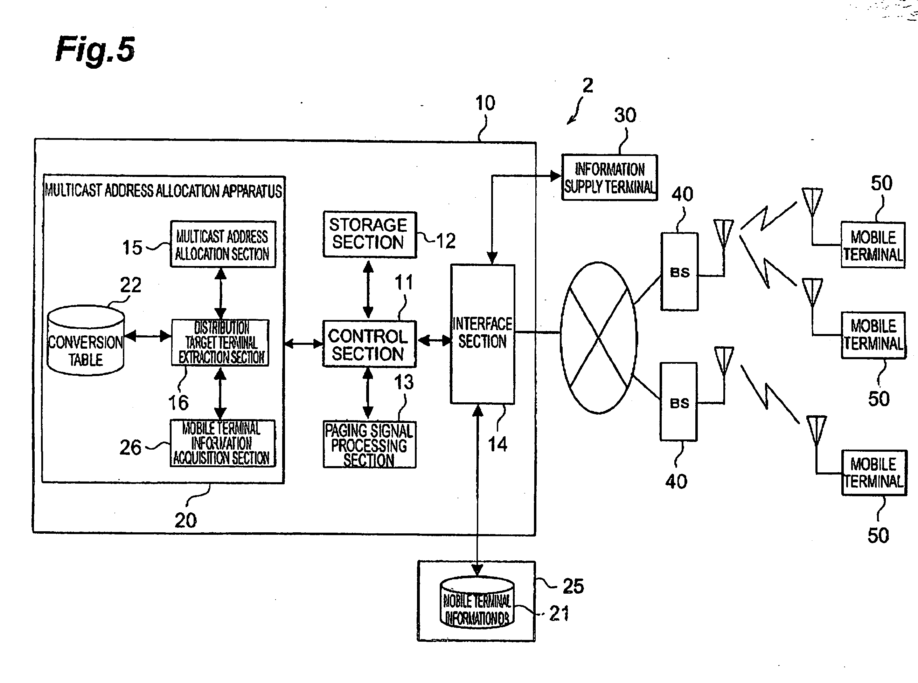

A description is provided next for an information distribution system 2 according to a second embodiment of the present invention. Fig. 5 is a constitutional view of the information distribution system 2 according to the second embodiment. The information distribution system 2 according to the second embodiment has a constitution that is fundamentally the same as that for the information distribution system 1 according to the first embodiment, but differs in that the information distribution apparatus 10 that constitutes the information distribution system 2 according to the second embodiment does not comprise the mobile terminal information DB 21, and in that an information management node 25 comprises the mobile terminal information DB 21 separately from the information distribution apparatus 10. The information distribution apparatus 10 according to the second embodiment further comprises a mobile terminal information acquisition section 26 which comprises a function for acquiring mobile terminal information by requesting mobile terminal information from the information management node 25.

The operation of the information distribution system 2 according to the second embodiment has a process flow that is fundamentally the same as that for the operation of the information distribution system 1 according to the first embodiment, but differs in that the information distribution apparatus 10 according to the first embodiment extracts mobile terminals 50 that are the distribution targets from the mobile terminal information DB 21 on the basis of designation information. The information distribution apparatus 10 according to the second embodiment, on the other hand, extracts the mobile terminals 50 which are the distribution targets on the basis of the mobile terminal information acquired by the mobile terminal information acquisition section 26.

Similarly to the information distribution system 1 according to the first embodiment, the information distribution system 2 according to the second embodiment reduces the traffic on the mobile communications network, which makes it possible to implement efficient multicast transmissions of information. In addition, in the information distribution system 2 according to the second embodiment, because the information distribution apparatus 10 comprises the mobile terminal information acquisition section 26, which acquires mobile terminal information from the mobile terminal information DB 21 of the information management node 25, it is possible to constitute a system through effective usage of an existing information management node 25.

Finally, a description will be provided for an information distribution program as well as for a computer-readable recording medium (referred to simply as "recording medium" hereinafter) for recording this information distribution program, which pertain to the first embodiment of the present invention. Here, rather than being a reading device which is provided as a computer hardware resource, the "recording medium" is a device that is capable of inducing states of change in magnetic, optical and electrical energy and the like in accordance with the descriptive content of a program and that is capable of transferring the program descriptive content to a reading device in the format of the corresponding signal. Such a recording medium is equivalent to a magnetic disk, an optical disk, a CD-ROM, or memory installed in a computer, for example.

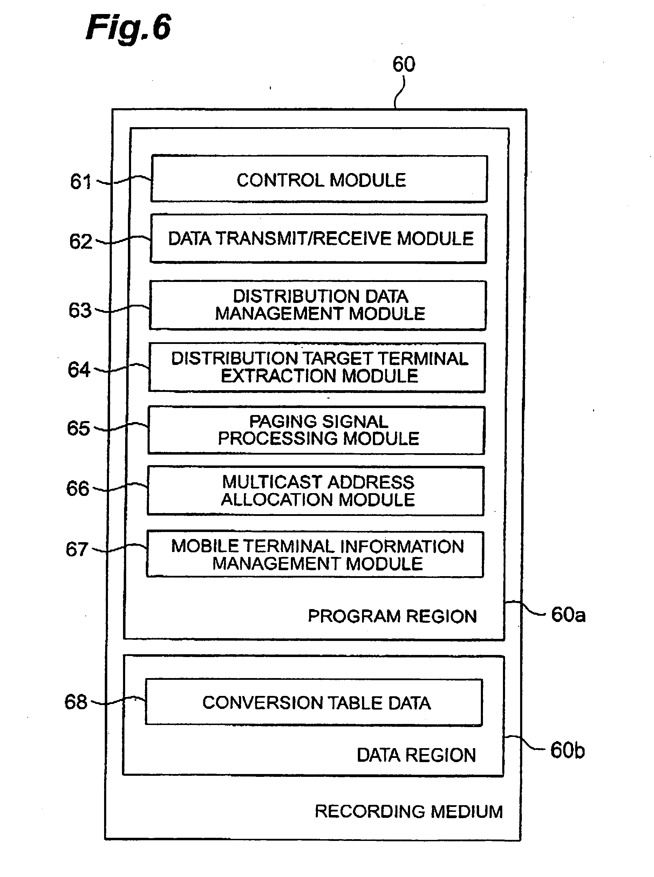

Fig. 6 is a constitutional view of a recording medium 60 pertaining to the first embodiment of the present invention. As shown in Fig. 6, the recording medium 60 comprises a program region 60a for recording programs, and a data region 60b for recording data. An information distribution program and a multicast address allocation program (module) 66 are recorded in the program region 60a. The information distribution program is a program for the multicast distribution of information by the mobile communications system. As shown in Fig. 6, this program is constituted comprising a control module 61 for the overall control of the distribution processing; a data send/receive module 62 for causing a computer to send and receive data to and from the outside; a distribution data management module 63 for causing a computer to perform buffer storage of distribution data; a distribution target terminal extraction module 64 for extracting distribution target terminals; a paging signal processing module 65 for generating a paging signal and for processing participation confirmation signals which are transmitted in response to the paging signal; a multicast address allocation module 66 for allocating a multicast address to the mobile terminals 50 to which information is distributed; and a mobile terminal information management module 67 for managing the process in which a computer is made to store location information on the mobile terminals 50 anduser registration information, and to read the information thus stored. Here, the functions that are implemented when the modules are executed by a computer, namely the control module 61, the data send/receive module 62, the distribution target terminal extraction module 64, the paging signal processing module 65, and the multicast address allocation module 66, are similar to the respective functions of the control section 11, the interface section 14, the distribution target terminal extraction section 16, the paging signal processing section 13, and the multicast address allocation section 15, which pertain to the information distribution system 1 described above. Also, executing the distribution data management module 63 and the mobile terminal information management module 67 by means of the computer realizes the above-mentioned storage section 12 of the information distribution system 1 to build the mobile terminal information DB 21 in a storage space which the computer comprises. Further, the conversion table data 68 stored in the data region 60b is data used at the time of the data conversion processing upon executing the distribution target terminal extraction module 64. This data is equivalent to the above-mentioned conversion table 22 of the information distribution system 1.

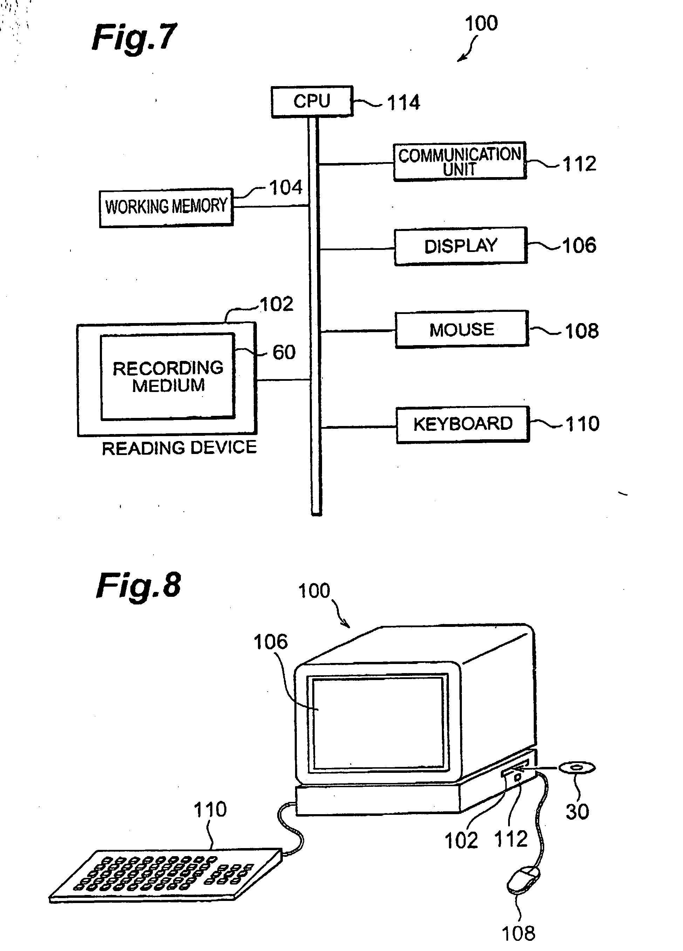

Fig. 7 is a constitutional view of a computer system (a server system, for example) for executing the information distribution program recorded on the recording medium 60. Fig. 8 is a perspective view of a computer 100 for executing the information distribution program recorded on the recording medium 60. As shown in Figs. 7 and 8, the computer 100 comprises a reading device 102; a working memory (RAM) 104 where the operating system (OS) resides permanently; a display 106 constituting display means; a mouse 108 and a keyboard 110 which constitute inputting means; a communication unit 112 constituting communication means; and a CPU 114 for controlling the execution of the information distribution program, and so forth. Here, when the recording medium 60 is inserted in the reading device 102, the information which is recorded on the recording medium 60 is accessible by the reading device 102, and the information distribution program which is recorded in the program region 60a of the recording medium 60 is then executable by the computer 100. As a result of the recording medium according to the first embodiment being read by a computer and execution of the information distribution program, the information distribution apparatus 10 according to the first embodiment can be implemented and it is possible to realize efficient multicast transmissions of information.

Devices that can be used as the above-mentioned reading device 102 include a flexible disk drive, a CD-ROM drive, or magnetic tape drive that is compatible with the recording medium 60.

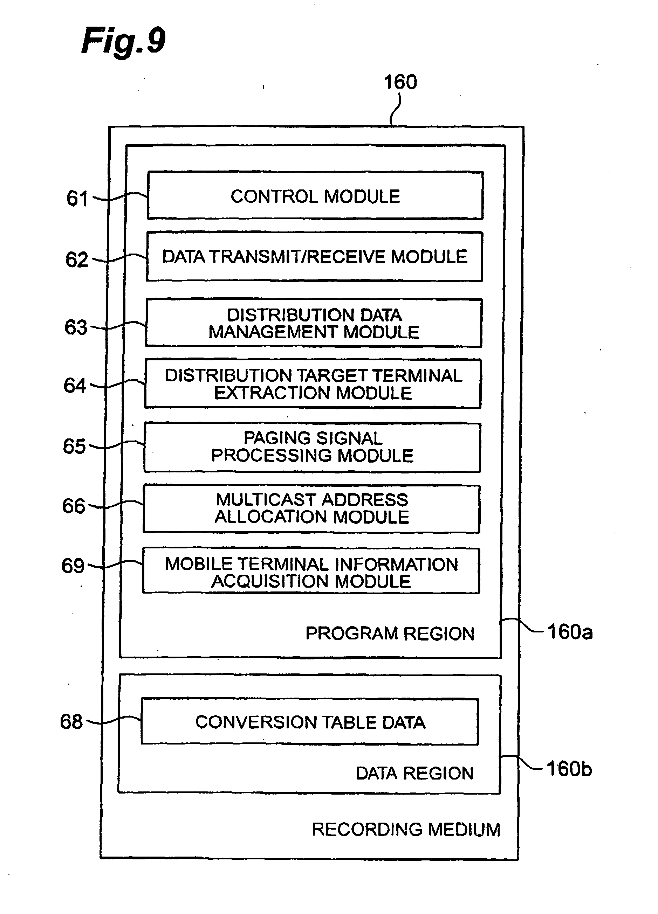

A description will be provided next of the information distribution program and the recording medium for recording the information distribution program, which pertain to the second embodiment. Fig. 9 is a constitutional view of the recording medium which is for recording the information distribution program and which pertains to the second embodiment. The recording medium 160 according to the second embodiment differs from the recording medium 60 according to the first embodiment on account of comprising a mobile terminal information acquisition module 69 in place of the mobile terminal information management module 67. The function that is implemented as a result of executing the mobile terminal information acquisition module 69 by means of a computer is similar to that of the mobile terminal information acquisition means 26 described in the information distribution system 2 according to the second embodiment. As a result of the recording medium according to the second embodiment being read by a computer and execution of the information distribution program, the information distribution apparatus 10 according to the second embodiment can be implemented and it is possible to implement efficient multicast transmissions of information.

The embodiments of the present invention were described in detail hereinabove but the present invention is not limited to or by the above embodiments. In the embodiments above, the mobile terminals to which information is to be distributed are designated by the gender and age of the users, but the distribution targets could also be designated by means of other attributes such as occupation, residential address and the like, for example. In addition to registration information preset by users, mobile terminals for distribution can also be designated in accordance with the user location areas. A description will now be provided for the operation of the information distribution apparatus when designation information that also designates user location areas is transmitted by the information supply terminal. Because the basic operation process flow is the same as the operation described in the embodiment described above, the description is provided with reference to Fig. 4. First, distribution data is transmitted by the information supply terminal to the information distribution apparatus. Thereupon, let us suppose that, as the designation information serving to designate the mobile terminals to which information is to be distributed, in addition to "in his twenties" and "male", the designation is made that the mobile terminals should be located in "area X". Upon receiving the distribution data, the information distribution apparatus buffers the distribution data and performs distribution data conversion processing. Here, for area X, when there is a difference in format between the information supply terminal and information distribution apparatus, format relationships for the area are stored in the conversion table, and the distribution data is converted by means of another method that is similar to that for the conversion of the designation information. As a result of the distribution data conversion processing, the designation information is "A", "C", and "area X". Thereafter, when the mobile terminals which are the targets of the information distribution are extracted from the mobile terminal information DB shown in Fig. 2, the mobile terminals A and Dare extracted. It is thus also possible to designate the mobile terminals for distribution by using the mobile terminal location areas as the designation information. Efficient distribution of information to suitably locate mobile terminals can thus be performed. The process flow of the data distribution after the extraction of mobile terminals on the basis of the designation information, namely the processes of allocating a multicast address, issuing a paging signal, and receiving participation confirmation signals, is the same as the process flow for the operation of the information distribution system according to the embodiment described above.

According to the present invention, an efficient multicast group can be formed by extracting the mobile terminals which match the conditions of the designation information that is transmitted by the information supply terminal. Moreover, the traffic required for the allocation of a multicast address can be reduced by allocating a multicast address at the same time as a paging signal by transmitting a paging signal for paging those mobile terminals which are the targets of the information distribution after a multicast address has been added to this paging signal.

Also according to the present invention, participation confirmation signals for participation in a multicast group are received, such signals being transmitted by mobile terminals via base stations, and information is distributed to those mobile terminals transmitting the participation confirmation signals on the basis of the participation confirmation signals thus received. At such time, because it is possible to make multicast transmissions of information to only given base stations by specifying the base stations which relay the participation confirmation signals, information is not transmitted to base stations where the mobile terminals transmitting the participation confirmation signals for participation in the multicast group are not located. It is thus possible to reduce unnecessary traffic and to realize efficient information distribution.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A multicast address allocation apparatus that allocates a multicast address in order to implement multicast transmissions of information to a plurality of mobile terminals, this information being relayed by a plurality of base stations, comprising:
mobile terminal information storage means for storing location information on said mobile terminals, and registration information that is preset by the users of said mobile terminals, as mobile terminal information;
distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information stored by the mobile terminal information storage means; and
multicast address allocation means for allocating a multicast address to the distribution target terminals extracted by said distribution target terminal extraction means.

2. A multicast address allocation apparatus that allocates a multicast address inorder to implement multicast transmissions of information to a plurality of mobile terminals, this information being relayed by a plurality of base stations, comprising:
mobile terminal information acquisition means for acquiring mobile terminal information by requesting mobile terminal information from mobile terminal information storage means that store location information on said mobile terminals, and registration information that is preset by the users of said mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information acquired by said mobile terminal information acquisition means; and
multicast address allocation means for allocating a multicast address to the distribution target terminals extracted by said distribution target terminal extraction means.

3. The multicast address allocation apparatus according to claim 1 or 2, wherein said mobile terminal information storage means store, as said location information, location area information indicating the areas in which said mobile terminals are located.

4. An information distribution apparatus for performing multicast transmissions of information to a plurality of mobile terminals, this information being relayed by a plurality of base stations, comprising:
the multicast address allocation apparatus according to any one of claims 1 to 3;
paging signal processing means for transmitting a paging signal, which has a multicast address allocated by said multicast address allocation apparatus added thereto, to the areas in which the distribution target terminals extracted by said distribution target terminal extraction means are located, and for receiving participation confirmation signals which are transmitted by said mobile terminals via said base stations in response to said paging signal and which indicate participation in a multicast group; and
information distribution means, which, when participation confirmation signals are received by said paging signal processing means, distribute information, via the base stations relaying said participation confirmation signals, to the mobile terminals transmitting said participation confirmation signals.

5. An information distribution system for performing multicast transmissions of information to a plurality of mobile terminals, comprising:
a plurality of mobile terminals;
a plurality of base stations for relaying the transmission and receipt of information between said mobile terminals; and
the information distribution apparatus according to claim 4,
wherein said mobile terminals each comprise paging signal receiving means for receiving a paging signal which has a multicast address added thereto; and participation confirmation signal transmitting means for transmitting a participation confirmation signalindicatingparticipation in a multicast group in response to the paging signal thus received by said paging signal receiving means.

6. A multicast address allocation method that allocates a multicast address in order to implement multicast transmissions of information to a plurality of mobile terminals, this information being relayed by a plurality of base stations, in which mobile terminal information storage means are made to store in advance, as mobile terminal information, location information on said mobile terminals, and registration information that is preset by the users of said mobile terminals, wherein said information distribution method comprises:
a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information stored by said mobile terminal information storage means; and a multicast address allocation step of allocating amul ticast address to the distribution target terminals extracted in said distribution target terminal extraction step.

7. A multicast address allocation method that allocates a multicast address in order to implement multicast transmissions of information to a plurality of mobile terminals, this information being relayed by a plurality of base stations, comprising:
a mobile terminal information acquisition step of acquiring mobile terminal information by requesting mobile terminal information from mobile terminal information storage means that store location information on said mobile terminals, and registration information that is preset by the users of said mobile terminals, as mobile terminal information; a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information acquired in said mobile terminal information acquisition step; and
a multicast address allocation step of allocating a multicast address to the distribution target terminals extracted in said distribution target terminal extraction step.

8. The multicast address allocation method according to claim 6 or 7, wherein said mobile terminal information storage means store, as said location information, location area information indicating the areas in which said mobile terminals are located.

9. An information distribution method for performing multicast transmissions of information to a plurality of mobile terminals, this information being relayed by a plurality of base stations, wherein mobile terminal information storage means are made to store in advance, as mobile terminal information, location information on the mobile terminals, and registration information that is preset by the users of the mobile terminals, and wherein said information distribution method comprises:
a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information stored by said mobile terminal information storage means;
a multicast address allocation step of allocating a multicast address to the distribution target terminals extracted in said distribution target terminal extraction step;
a paging signal processing step of transmitting a paging signal, which has the multicast address allocated in said multicast address allocation step added thereto, to the areas in which the distribution target terminals extracted in said distribution target terminal extraction step are located, and of receiving participation confirmation signals which are transmitted by said mobile terminals via said base stations in response to said paging signal and which indicate participation in a multicast group; and
an information distribution step of distributing information, via the base stations relaying said participation confirmation signals, to the mobile terminals transmitting said participation confirmation signals, when participation confirmation signals are received in said paging signal processing step.

10. An information distribution method for performing multicast transmissions of information to a plurality of mobile terminals, this information being relayed by a plurality of base stations, comprising:
a mobile terminal information acquisition step of acquiring mobile terminal information by requesting mobile terminal information from mobile terminal information storage means that store location information on the mobile terminals, and registration information that is preset by the users of the mobile terminals, as mobile terminal information; a distribution target terminal extraction step of receiving designation information for designating the mobile terminals to which information is to be distributed, this designation information being transmitted by an information supply terminal, and of extracting the mobile terminals which match the conditions of the received designation information on the basis of the mobile terminal information acquired in said mobile terminal information acquisition step;
a multicast address allocation step of allocating a multicast address to the distribution target terminals extracted in said distribution target terminal extraction step; a paging signal processing step of transmitting a paging signal, which has the multicast address allocated in said multicast address allocation step added thereto, to the areas in which the distribution target terminals extracted in said distribution target terminal extraction step are located, and of receiving participation confirmation signals which arc transmitted by said mobile terminals via said base stations in response to said paging signal and which indicate participation in a multicast group; and
an information distribution step of distributing information, via the base stations relaying said participation confirmation signals, to the mobile terminals transmitting said participation confirmation signals, when participation confirmation signals are received in said paging signal processing step.

11. A multicast address allocation program, which, in order to allocate a multicast address for implementing multicast transmissions of information to a plurality of mobile terminals, this information being relayed by a plurality of base stations, causes a computer to function as:
mobile terminal information storage means for storing location information on the mobile terminals, and registration information that is preset by the users of the mobile terminals, as mobile terminal information;
distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information stored by the mobile terminal information storage means; and
multicast address allocation means for allocating a
multicast address to the distribution target terminals extracted by said distribution target terminal extraction means.

12. A multicast address allocation program, which, in order to allocate a multicast address for implementing multicast transmissions of information to a plurality of mobile terminals, this information being relayed by a plurality of base stations, causes a computer to function as:
mobile terminal information acquisition means for acquiring mobile terminal information by requesting mobile terminal information from mobile terminal information storage means that store location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information acquired by said mobile terminal information acquisition means; and
multicast address allocation means for allocating a multicast address to the distribution target terminals extracted by said distribution target terminal extraction means.

13. The multicast address allocation program according to claim 11 or 12, which causes said mobile terminal information storage means to store location area information indicating the areas in which the mobile terminals are located, as said location information.

14. An information distribution program, which, in order to perform multicast transmissions of information to a plurality of mobile terminals, this information being relayed by a plurality of base stations, causes a computer to function as:
mobile terminal information storage means for storing location information on the mobile terminals, and registration information that is preset by the users of the mobile terminals, as mobile terminal information;
distribution target terminal extractionmeans for receiving designation information for designating the mobile terminals to which information is to be distributed, this designation information being transmitted by an information supply terminal, and for extracting the mobile terminals which match the conditions of the received designation information from the mobile terminal information storage means;
multicast address allocation means for allocating a multicast address to the distribution target terminals extracted by said distribution target terminal extraction means;
paging signal processing means for transmitting a paging signal, which has a multicast address allocated by said multicast address allocation means added thereto, to the areas in which the distribution target terminals extracted by said distribution target terminal extraction means are located, and for receiving participation confirmation signals which are transmitted by said mobile terminals via said base stations in response to said paging signal and which indicate participation in a multicast group; and information distribution means, which, when participation confirmation signals are received by said paging signal processing means, distribute information, via the base stations relaying said participation confirmation signals, to the mobile terminals transmitting said participation confirmation signals.

15. An information distribution program, which, in order to perform multicast transmissions of information to a plurality of mobile terminals, this information being relayed by a plurality of base stations, causes a computer to function as:
mobile terminal information acquisitionmeans for acquiring mobile terminal information by requesting mobile terminal information from mobile terminal information storage means that store location information on the mobile terminals, and registration information that is preset by the users of the mobile terminals, as mobile terminal information; distribution target terminal extraction means for receiving designation information for designating the mobile terminals to which information is to be distributed, this designation information being transmitted by an information supply terminal, and for extracting the mobile terminals which match the conditions of the received designation information on the basis of the mobile terminal information acquired-by the mobile terminal information acquisition means;
multicast address allocation means for allocating a multicast address to the distribution target terminals extracted by said distribution target terminal extraction means;
paging signal processing means for transmitting a paging signal, which has the multicast address allocated by said multicast address allocation means added thereto, to the areas in which the distribution target terminals extracted by said distribution target terminal extraction means are located, and for receiving participation confirmation signals which are transmitted by said mobile terminals via said base stations in response to said paging signal and which indicate participation in a multicast group; and information distribution means, which, when participation confirmation signals are received by said paging signal processing means, distribute information, via the base stations relaying said participation confirmation signals, to the mobile terminals transmitting said participation confirmation signals.

16. A computer-readable recording medium, which records the multicast address allocation program according to any one of claims 11 to 13, or the information distribution program according to either of claims 14 and 15.

## Patentansprüche

1. Multicast-Adressenzuweisungsvorrichtung, die eine Multicast-Adresse zuweist, um Multicast-Übertragungen von Information an eine Mehrzahl von mobilen Endgeräten zu realisieren, wobei diese Information durch eine Mehrzahl von Basisstationen weitergeleitet wird, aufweisend:
eine Mobilendgerät-Informationsspeichereinrichtung, welche Standortinformation betreffend die mobilen Endgeräte und Registrierungsinformation, die durch die Benutzer der mobilen Endgeräte voreingestellt wird, als Mobilendgerätinformation speichert;
eine Verteilungszielendgerät-Extraktionseinrichtung, welche Bezeichnungsinformation zum Bezeichnen der mobilen Endgeräte empfängt, an welche Information zu verteilen ist, wobei diese Bezeichnungsinformation durch ein Informationszuführungsendgerät gesendet wird, und welche die mobilen Endgeräte, die mit den Bedingungen der empfangenen Bezeichnungsinformation übereinstimmen, auf Basis der durch die Mobilendgerät-Informationsspeichereinrichtung gespeicherten Mobilendgerätinformation extrahiert; und
eine Multicast-Adressenzuweisungseinrichtung, welche eine Zuweisung einer Multicast-Adresse an die Verteilungsziel-Endgeräte durchführt, die durch die Verteilungszielendgerät-Extraktionseinrichtung extrahiert wurden.

2. Multicast-Adressenzuweisungsvorrichtung, die eine Multicast-Adresse zuweist, um Multicast-Übertragungen von Information an eine Mehrzahl von mobilen Endgeräten zu realisieren, wobei diese Information durch eine Mehrzahl von Basisstationen weitergeleitet wird, aufweisend:
eine Mobilendgerät-Informationsermittlungseinrichtung, welche Mobilendgerätinformation durch Nachfragen von Mobilendgerätinformation von der Mobilendgerät-Informationsspeichereinrichtung, welche Standortinformation betreffend die mobilen Endgeräte speichert, und Registrierungsinformation, die durch die Benutzer der mobilen Endgeräte voreingestellt wird, als Mobilendgerätinformation ermittelt;
eine Verteilungszielendgerät-Extraktionseinrichtung, welche Bezeichnungsinformation zum Bezeichnen der mobilen Endgeräte empfängt, an welche Information zu verteilen ist, wobei diese Bezeichnungsinformation durch ein Informationszuführungsendgerät gesendet wird, und welche die mobilen Endgeräte, die mit den Bedingungen der empfangenen Bezeichnungsinformation übereinstimmen, auf Basis der durch die Mobilendgerät-Informationsspeichereinrichtung gespeicherten Mobilendgerätinformation extrahiert; und
eine Multicast-Adressenzuweisungseinrichtung, welche eine Zuweisung einer Multicast-Adresse an die Verteilungsziel-Endgeräte durchführt, die durch die Verteilungszielendgerät-Extraktionseinrichtung extrahiert wurden.

3. Multicast-Adressenzuweisungsvorrichtung nach Anspruch 1 oder 2, bei der die Mobilendgerät-Informationsspeichereinrichtung als die Standortinformation Standortzoneninformation speichert, welche die Zonen angibt, in denen sich die mobilen Endgeräte befinden.

4. Informationsverteilungsvorrichtung zum Durchführen von Multicast-Übertragungen von Information an eine Mehrzahl von mobilen Endgeräten, wobei diese Information durch eine Mehrzahl von Basisstationen weitergeleitet wird, aufweisend:
die Multicast-Adressenzuweisungsvorrichtung nach einem der Ansprüche 1 bis 3;
eine Funkrufsignal-Verarbeitungseinrichtung, die ein Funkrufsignal, zu dem eine durch die Multicast-Adressenzuweisungsvorrichtung zugewiesene Multicast-Adresse hinzugefügt ist, an die Zonen sendet, in denen sich die Verteilungsziel-Endgeräte, die durch die Verteilungszielendgerät-Extraktionseinrichtung extrahiert wurden, befinden, und welche Teilnahmebestätigungssignale empfängt, die durch die mobilen Endgeräte über die Basisstationen ansprechend auf das Funkrufsignal gesendet werden und die eine Teilnahme in einer Multicast-Gruppe bezeichnen; und
eine Informationsverteilungseinrichtung, die, wenn Teilnahmebestätigungssignale von der Funkrufsignal-Verarbeitungseinrichtung empfangen werden, Information über die die Teilnahmebestätigungssignale weiterleitenden Basisstationen an die mobilen Endgeräte, welche die Teilnahmebestätigungssignale senden, verteilt.

5. Informationsverteilungssystem, welches Multicast-Übertragungen von Information an eine Mehrzahl von mobilen Endgeräten durchführt, aufweisend:
eine Mehrzahl von mobilen Endgeräten;
eine Mehrzahl von Basisstationen, welche als Vermittler beim Senden und Empfangen von Information zwischen den mobilen Endgeräten dienen; und die Informationsverteilungsvorrichtung nach Anspruch 4,
wobei die mobilen Endgeräte jeweils aufweisen: eine Funkrufsignal-Empfangseinrichtung zum Empfangen eines Funkrufsignals, zu dem eine Multicast-Adresse hinzugefügt wurde; und eine Teilnahmebestätigungssignal-Sendeeinrichtung, die ein Teilnahmebestätigungssignal, das eine Teilnahme in einer Multicast-Gruppe angibt, ansprechend auf das auf diese Weise von der Funkrufsignal-Empfangseinrichtung empfangene Funkrufsignal sendet.

6. Multicast-Adressenzuweisungsverfahren, das eine Multicast-Adresse zuweist, um Multicast-Übertragungen von Information an eine Mehrzahl von mobilen Endgeräten zu realisieren, wobei diese Information durch eine Mehrzahl von Basisstationen weitergeleitet wird, wobei die Mobilendgerät-Informationsspeichereinrichtung ausgebildet ist, um Standortinformation betreffend die mobilen Endgeräte und Registrierinformation, die durch die Benutzer der mobilen Endgeräte voreingestellt wird, vorab als Mobilendgerätinformation zu speichern, wobei das Informationsverteilungsverfahren aufweist:
einen Verteilungszielendgerät-Extraktionsschritt, bei dem Bezeichnungsinformation empfangen wird, welche die mobilen Endgeräte bezeichnet, an welche die Information verteilt werden soll, wobei diese Bezeichnungsinformation durch ein Informationszuführungsendgerät gesendet wird, und bei dem die mobilen Endgeräte extrahiert werden, welche mit den Bedingungen der empfangenen Bezeichnungsinformation übereinstimmen, und zwar auf Basis der durch die Mobilendgerät-Informationsspeichereinrichtung gespeicherten Mobilendgerätinformation; und
einen Multicast-Adressenzuweisungsschritt, bei dem den Verteilungszielendgeräten, die bei dem Verteilungszielendgeräte-Extrahierschritt extrahiert wurden, eine Multicast-Adresse zugewiesen wird.

7. Multicast-Adressenzuweisungsverfahren, das eine Multicast-Adresse zuweist, um Multicast-Übertragungen von Information an eine Mehrzahl von mobilen Endgeräten zu realisieren, wobei diese Information durch eine Mehrzahl von Basisstationen weitergeleitet wird, beinhaltend:
einen Mobilendgerätinformations-Ermittlungsschritt, bei dem Mobilendgerätinformation durch Nachfragen von Mobilendgerätinformation von der Mobilendgerät-Informationsspeichereinrichtung, welche Standortinformation betreffend die mobilen Endgeräte speichert, und Registrierinformation, die durch die Benutzer der mobilen Endgeräte voreingestellt wird, als Mobilendgerätinformation ermittelt wird;
einen Verteilungszielendgerät-Extraktionsschritt, bei dem Bezeichnungsinformation empfangen wird, welche die mobilen Endgeräte bezeichnet, an welche die Information verteilt werden soll, wobei diese Bezeichnungsinformation durch ein Informationszuführungsendgerät gesendet wird, und bei dem die mobilen Endgeräte extrahiert werden, welche mit den Bedingungen der empfangenen Bezeichnungsinformation übereinstimmen, und zwar auf Basis der beim Mobilendgerät-Informationsermittlungsschritt ermittelten Mobilendgerätinformation; und
einen Multicast-Adressenzuweisungsschritt, bei dem den Verteilungszielendgeräten, die bei dem Verteilungszielendgeräte-Extrahierschritt extrahiert wurden, eine Multicast-Adresse zugewiesen wird.

8. Multicast-Adressenzuweisungsverfahren nach Anspruch 6 oder 7, bei dem die Mobilendgerät-Informationsspeichereinrichtung als die Standortinformation Standortzoneninformation speichert, welche die Zonen angibt, in denen sich die mobilen Endgeräte befinden.

9. Informationsverteilungsverfahren zum Durchführen von Multicast-Übertragungen von Information an eine Mehrzahl von mobilen Endgeräten, wobei diese Information durch eine Mehrzahl von Basisstationen weitergeleitet wird, und wobei eine Mobilendgerät-Informationsspeichereinrichtung ausgebildet ist, um Standortinformation betreffend die mobilen Endgeräte und Registrierinformation, die durch die Benutzer der mobilen Endgeräte voreingestellt wird, vorab als Mobilendgerätinformation zu speichern, und wobei das Informationsverteilungsverfahren umfasst:
einen Verteilungszielendgerät-Extraktionsschritt, bei dem Bezeichnungsinformation empfangen wird, welche die mobilen Endgeräte bezeichnet, an welche die Information verteilt werden soll, wobei diese Bezeichnungsinformation durch ein Informationszuführungsendgerät gesendet wird, und bei dem die mobilen Endgeräte extrahiert werden, welche mit den Bedingungen der empfangenen Bezeichnungsinformation übereinstimmen, und zwar auf Basis der beim Mobilendgerät-Informationsermittlungsschritt ermittelten Mobilendgerätinformation;
einen Multicast-Adressenzuweisungsschritt, bei dem den Verteilungszielendgeräten, die bei dem Verteilungszielendgeräte-Extrahierschritt extrahiert wurden, eine Multicast-Adresse zugewiesen wird;
einen Funkrufsignal-Verarbeitungsschritt, bei dem ein Funkrufsignal, zu dem eine beim Multicast-Adressenzuweisungsschritt zugewiesene Multicast-Adresse hinzugefügt ist, an die Zonen gesendet wird, in denen sich die Verteilungsziel-Endgeräte, die beim Verteilungszielendgerät-Extraktionsschritt extrahiert wurden, befinden, und bei dem Teilnahmebestätigungssignale empfangen werden, die durch die mobilen Endgeräte über die Basisstationen ansprechend auf das Funkrufsignal gesendet werden und die eine Teilnahme in einer Multicast-Gruppe bezeichnen; und
eine Informationsverteilungsschritt, bei dem Information über die die Teilnahmebestätigungssignale weiterleitenden Basisstationen an die mobilen Endgeräte, welche die Teilnahmebestätigungssignale senden, verteilt werden, wenn Teilnahmebestätigungssignale beim Funkrufsignal-Verarbeitungsschritt empfangen werden.

10. Informationsverteilungsverfahren zum Durchführen von Multicast-Übertragungen von Information an eine Mehrzahl von mobilen Endgeräten, wobei diese Information durch eine Mehrzahl von Basisstationen weitergeleitet wird, beinhaltend:
einen Mobilendgerätinformations-Ermittlungsschritt, bei dem Mobilendgerätinformation durch Nachfragen von Mobilendgerätinformation von der Mobilendgerät-Informationsspeichereinrichtung, welche Standortinformation betreffend die mobilen Endgeräte speichert, und Registrierinformation, die durch die Benutzer der mobilen Endgeräte voreingestellt wird, als Mobilendgerätinformation ermittelt wird;
einen Verteilungszielendgerät-Extraktionsschritt, bei dem Bezeichnungsinformation empfangen wird, welche die mobilen Endgeräte bezeichnet, an welche die Information verteilt werden soll, wobei diese Bezeichnungsinformation durch ein Informationszuführungsendgerät gesendet wird, und bei dem die mobilen Endgeräte extrahiert werden, welche mit den Bedingungen der empfangenen Bezeichnungsinformation übereinstimmen, und zwar auf Basis der beim Mobilendgerät-Informationsermittlungsschritt ermittelten Mobilendgerätinformation;
einen Multicast-Adressenzuweisungsschritt, bei dem den Verteilungszielendgeräten, die bei dem Verteilungszielendgeräte-Extrahierschritt extrahiert wurden, eine Multicast-Adresse zugewiesen wird;
einen Funkrufsignal-Verarbeitungsschritt, bei dem ein Funkrufsignal, zu dem eine beim Multicast-Adressenzuweisungsschritt zugewiesene Multicast-Adresse hinzugefügt ist, an die Zonen gesendet wird, in denen sich die Verteilungsziel-Endgeräte, die beim Verteilungszielendgerät-Extraktionsschritt extrahiert wurden, befinden, und bei dem Teilnahmebestätigungssignale empfangen werden, die durch die mobilen Endgeräte über die Basisstationen ansprechend auf das Funkrufsignal gesendet werden und welche eine Teilnahme in einer Multicast-Gruppe bezeichnen; und
eine Informationsverteilungsschritt, bei dem Information über die die Teilnahmebestätigungssignale weiterleitenden Basisstationen an die mobilen Endgeräte, welche die Teilnahmebestätigungssignale senden, verteilt werden, wenn Teilnahmebestätigungssignale beim Funkrufsignal-Verarbeitungsschritt empfangen werden.

11. Multicast-Adressenzuweisungsprogramm, das, um eine Multicast-Adresse zum Realisieren von Multicast-Übertragungen von Information an eine Mehrzahl von mobilen Endgeräten zuzuweisen, wobei diese Information durch eine Mehrzahl von Basisstationen weitergeleitet wird, einen Computer veranlasst, zu funktionieren als:
eine Mobilendgerät-Informationsspeichereinrichtung, welche Standortinformation betreffend die mobilen Endgeräte und Registrierungsinformation, die durch die Benutzer der mobilen Endgeräte voreingestellt wird, als Mobilendgerätinformation speichert;
eine Verteilungszielendgerät-Extraktionseinrichtung, welche Bezeichnungsinformation zum Bezeichnen der mobilen Endgeräte empfängt, an welche Information zu verteilen ist, wobei diese Bezeichnungsinformation durch ein Informationszuführungsendgerät gesendet wird, und welche die mobilen Endgeräte, die mit den Bedingungen der empfangenen Bezeichnungsinformation übereinstimmen, auf Basis der durch die Mobilendgerät-Informationsspeichereinrichtung gespeicherten Mobilendgerätinformation extrahiert; und
eine Multicast-Adressenzuweisungseinrichtung, welche eine Zuweisung einer Multicast-Adresse an die Verteilungsziel-Endgeräte durchführt, die durch die Verteilungszielendgerät-Extraktionseinrichtung extrahiert wurden.

12. Multicast-Adressenzuweisungsprogramm, das, um eine Multicast-Adresse zum Realisieren von Multicast-Übertragungen von Information an eine Mehrzahl von mobilen Endgeräten zuzuweisen, wobei diese Information durch eine Mehrzahl von Basisstationen weitergeleitet wird, einen Computer veranlasst, zu funktionieren als:
eine Mobilendgerät-Informationsermittlungseinrichtung, welche Mobilendgerätinformation durch Nachfragen von Mobilendgerätinformation von der Mobilendgerät-Informationsspeichereinrichtung, welche Standortinformation betreffend die mobilen Endgeräte speichert, und Registrierungsinformation, die durch die Benutzer der mobilen Endgeräte voreingestellt wird, als Mobilendgerätinformation ermittelt;
eine Verteilungszielendgerät-Extraktionseinrichtung, welche Bezeichnungsinformation zum Bezeichnen der mobilen Endgeräte empfängt, an welche Information zu verteilen ist, wobei diese Bezeichnungsinformation durch ein Informationszuführungsendgerät gesendet wird, und welche die mobilen Endgeräte, die mit den Bedingungen der empfangenen Bezeichnungsinformation übereinstimmen, auf Basis der durch die Mobilendgerät-Informationsspeichereinrichtung gespeicherten Mobilendgerätinformation extrahiert; und
eine Multicast-Adressenzuweisungseinrichtung, welche eine Zuweisung einer Multicast-Adresse an die Verteilungsziel-Endgeräte durchführt, die durch die Verteilungszielendgerät-Extraktionseinrichtung extrahiert wurden.

13. Multicast-Adressenzuweisungsprogramm nach Anspruch 11 oder 12, welches die Mobilendgerät-Informationsspeichereinrichtung veranlasst, Standortzoneninformation, welche die Zonen angibt, in denen sich die mobilen Endgeräte befinden, als die Standortinformation zu speichern.

14. Informationsverteilungsprogramm, das, um Multicast-Übertragungen von Information an eine Mehrzahl von mobilen Endgeräten durchzuführen, wobei diese Information durch eine Mehrzahl von Basisstationen weitergeleitet wird, einen Computer veranlasst, zu funktionieren als:
eine Mobilendgerät-Informationsspeichereinrichtung, welche Standortinformation betreffend die mobilen Endgeräte und Registrierungsinformation, die durch die Benutzer der mobilen Endgeräte voreingestellt wird, als Mobilendgerätinformation speichert;
eine Verteilungszielendgerät-Extraktionseinrichtung, welche Bezeichnungsinformation zum Bezeichnen der mobilen Endgeräte empfängt, an welche Information zu verteilen ist, wobei diese Bezeichnungsinformation durch ein Informationszuführungsendgerät gesendet wird, und welche die mobilen Endgeräte, die mit den Bedingungen der empfangenen Bezeichnungsinformation übereinstimmen, auf Basis der durch die Mobilendgerät-Informationsspeichereinrichtung gespeicherten Mobilendgerätinformation extrahiert;
eine Multicast-Adressenzuweisungseinrichtung, welche eine Zuweisung einer Multicast-Adresse an die Verteilungsziel-Endgeräte durchführt, die durch die Verteilungszielendgerät-Extraktionseinrichtung extrahiert wurden;
eine Funkrufsignal-Verarbeitungseinrichtung, die ein Funkrufsignal, zu dem eine durch die Multicast-Adressenzuweisungseinrichtung zugewiesene Multicast-Adresse hinzugefügt ist, an die Zonen sendet, in denen sich die Verteilungsziel-Endgeräte, die durch die Verteilungszielendgerät-Extraktionseinrichtung extrahiert wurden, befinden, und welche Teilnahmebestätigungssignale empfängt, die durch die mobilen Endgeräte über die Basisstationen ansprechend auf das Funkrufsignal gesendet werden und die eine Teilnahme in einer Multicast-Gruppe bezeichnen; und
eine Informationsverteilungseinrichtung, die, wenn Teilnahmebestätigungssignale von der Funkrufsignal-Verarbeitungseinrichtung empfangen werden, Information über die die Teilnahmebestätigungssignale weiterleitenden Basisstationen an die mobilen Endgeräte, welche die Teilnahmebestätigungssignale senden, verteilt.

15. Informationsverteilungsprogramm, das, um Multicast-Übertragungen von Information an eine Mehrzahl von mobilen Endgeräten durchzuführen, wobei diese Information durch eine Mehrzahl von Basisstationen weitergeleitet wird, einen Computer veranlasst, zu funktionieren als:
eine Mobilendgerät-Informationsermittlungseinrichtung, welche Mobilendgerätinformation durch Nachfragen von Mobilendgerätinformation von der Mobilendgerät-Informationsspeichereinrichtung, welche Standortinformation betreffend die mobilen Endgeräte speichert, und Registrierungsinformation, die durch die Benutzer der mobilen Endgeräte voreingestellt wird, als Mobilendgerätinformation ermittelt;
eine Verteilungszielendgerät-Extraktionseinrichtung, welche Bezeichnungsinformation zum Bezeichnen der mobilen Endgeräte empfängt, an welche Information zu verteilen ist, wobei diese Bezeichnungsinformation durch ein Informationszuführungsendgerät gesendet wird, und welche die mobilen Endgeräte, die mit den Bedingungen der empfangenen Bezeichnungsinformation übereinstimmen, auf Basis der durch die Mobilendgerät-Informationsspeichereinrichtung gespeicherten Mobilendgerätinformation extrahiert;
eine Multicast-Adressenzuweisungseinrichtung, welche eine Zuweisung einer Multicast-Adresse an die Verteilungsziel-Endgeräte durchführt, die durch die Verteilungszielendgerät-Extraktionseinrichtung extrahiert wurden;
eine Funkrufsignal-Verarbeitungseinrichtung, die ein Funkrufsignal, zu dem die durch die Multicast-Adressenzuweisungseinrichtung zugewiesene Multicast-Adresse hinzugefügt ist, an die Zonen sendet, in denen sich die Verteilungsziel-Endgeräte, die durch die Verteilungszielendgerät-Extraktionseinrichtung extrahiert wurden, befinden, und welche Teilnahmebestätigungssignale empfängt, die durch die mobilen Endgeräte über die Basisstationen ansprechend auf das Funkrufsignal gesendet werden und welche eine Teilnahme in einer Multicast-Gruppe bezeichnen; und
eine Informationsverteilungseinrichtung, die, wenn Teilnahmebestätigungssignale von der Funkrufsignal-Verarbeitungseinrichtung empfangen werden, Information über die die Teilnahmebestätigungssignale weiterleitenden Basisstationen an die mobilen Endgeräte, welche die Teilnahmebestätigungssignale senden, verteilt.

16. Computerlesbares Aufzeichnungsmedium, welches das Multicast-Adressenzuweisungsprogramm nach einem der Ansprüche 11 bis 13, oder das Informationsverteilungsprogramm nach einem der Ansprüche 14 und 15 aufzeichnet.

## Revendications

1. Dispositif d'attribution d'adresse multidiffusion qui attribue une adresse multidiffusion afin de mettre en oeuvre des transmissions d'informations multidiffusion vers une pluralité de terminaux mobiles, ces informations étant retransmises par une pluralité de stations de base, comprenant :
des moyens de stockage d'informations de terminaux mobiles pour stocker des informations de localisation sur lesdits terminaux mobiles, et des informations d'enregistrement qui sont prédéfinies par les utilisateurs desdits terminaux mobiles, en tant qu'informations des terminaux mobiles ;
des moyens d'extraction de terminaux cibles de distribution pour recevoir des informations de désignation pour désigner les terminaux mobiles auxquels les informations doivent être distribuées, ces informations de désignation étant transmises par un terminal de fourniture d'informations, et pour extraire les terminaux mobiles qui correspondent aux conditions des informations de désignation reçues sur la base des informations de terminaux mobiles stockées par les moyens de stockage d'informations de terminaux mobiles ; et
des moyens d'attribution d'adresse multidiffusion pour attribuer une adresse multidiffusion aux terminaux cibles de distribution extraits par lesdits moyens d'extraction de terminaux cibles de distribution.

2. Dispositif d'attribution d'adresse multidiffusion qui attribue une adresse multidiffusion afin de mettre en oeuvre des transmissions d'informations multidiffusion vers une pluralité de terminaux mobiles, ces informations étant retransmises par une pluralité de stations de base, comprenant :
des moyens d'acquisition d'informations de terminaux mobiles pour acquérir des informations de terminaux mobiles en demandant des informations de terminaux mobiles aux moyens de stockage d'informations de terminaux mobiles qui stockent des informations de localisation sur lesdits terminaux mobiles, et des informations d'enregistrement qui sont prédéfinies par les utilisateurs desdits terminaux mobiles, en tant qu'informations de terminaux mobiles ;
des moyens d'extraction de terminaux cibles de distribution pour recevoir des informations de désignation pour désigner les terminaux mobiles auxquels des informations doivent être distribuées, ces informations de désignation étant transmises par un terminal de fourniture d'informations, et pour extraire les terminaux mobiles qui correspondent aux conditions des informations de désignation reçues sur la base des informations de terminaux mobiles acquises par lesdits moyens d'acquisition d'informations de terminaux mobiles ; et
des moyens d'attribution d'adresse multidiffusion pour attribuer une adresse multidiffusion aux terminaux cibles de distribution extraits par lesdits moyens d'extraction de terminaux cibles de distribution.

3. Dispositif d'attribution d'adresse multidiffusion selon la revendication 1 ou 2, dans lequel lesdits moyens de stockage d'informations de terminaux mobiles stockent, en tant que lesdites informations de localisation, des informations de zone de localisation indiquant les zones dans lesquelles se trouvent lesdits terminaux mobiles.

4. Dispositif de distribution d'informations destiné à effectuer des transmissions d'informations multidiffusion vers une pluralité de terminaux mobiles, ces informations étant retransmises par une pluralité de stations de base, comprenant :
le dispositif d'attribution d'adresse multidiffusion selon l'une quelconque des revendications 1 à 3 ;
des moyens de traitement de signal de recherche de personnes pour transmettre un signal de recherche de personnes, auquel est ajouté une adresse multidiffusion attribuée par ledit dispositif d'attribution d'adresse multidiffusion, vers les zones dans lesquelles se trouvent les terminaux cibles de distribution extraits par lesdits moyens d'extraction de terminaux cibles de distribution, et pour recevoir des signaux de confirmation de participation qui sont transmis par lesdits terminaux mobiles via lesdites stations de base en réponse audit signal de recherche de personnes et qui indiquent la participation à un groupe multidiffusion ; et
des moyens de distribution d'informations, qui, lorsque des signaux de confirmation de participation sont reçus par lesdits moyens de traitement de signal de recherche de personnes, distribuent des informations, via les stations de base retransmettant lesdits signaux de confirmation de participation, vers les terminaux mobiles transmettant lesdits signaux de confirmation de participation.

5. Système de distribution d'informations destiné à effectuer des transmissions d'informations multidiffusion vers une pluralité de terminaux mobiles, comprenant :
une pluralité de terminaux mobiles ;
une pluralité de stations de base pour retransmettre la transmission et la réception d'informations entre lesdits terminaux mobiles ; et
le dispositif de distribution d'informations selon la revendication 4,
dans lequel lesdits terminaux mobiles comprennent chacun des moyens de réception de signal de recherche de personnes pour recevoir un signal de recherche de personnes auquel est ajoutée une adresse multidiffusion ; et des moyens de transmission de signal de confirmation de participation pour transmettre un signal de confirmation de participation indiquant la participation à un groupe multidiffusion en réponse au signal de recherche de personnes ainsi reçu par lesdits moyens de réception de signal de recherche de personnes.

6. Procédé d'attribution d'adresse multidiffusion qui attribue une adresse multidiffusion afin de mettre en oeuvre des transmissions d'informations multidiffusion vers une pluralité de terminaux mobiles, ces informations étant retransmises par une pluralité de stations de base, dans lesquelles des moyens de stockage d'informations de terminaux mobiles sont constitués pour stocker à l'avance, en tant qu'informations de terminaux mobile, des informations de localisation sur lesdits terminaux mobiles, et des informations d'enregistrement qui sont prédéfinies par les utilisateurs desdits terminaux mobiles, dans lequel ledit procédé de distribution d'informations comprend :
une étape d'extraction de terminaux cibles de distribution consistant à recevoir des informations de désignation pour désigner les terminaux mobiles auxquels les informations doivent être distribuées, ces informations de désignation étant transmises par un terminal de fourniture d'informations, et à extraire les terminaux mobiles qui correspondent aux conditions des informations de désignation reçues sur la base des informations de terminaux mobiles stockées par lesdits moyens de stockage d'informations de terminaux mobiles ; et
une étape d'attribution d'adresse multidiffusion consistant à attribuer une adresse multidiffusion aux terminaux cibles de distribution extraits dans ladite étape d'extraction de terminaux cibles de distribution.

7. Procédé d'attribution d'adresse multidiffusion qui attribue une adresse multidiffusion afin de mettre en oeuvre des transmissions d'informations multidiffusion vers une pluralité de terminaux mobiles, ces informations étant retransmises par une pluralité de stations de base, comprenant :
une étape d'acquisition d'informations de terminaux mobiles consistant à acquérir des informations de terminaux mobiles en demandant des informations de terminaux mobiles aux moyens de stockage d'informations de terminaux mobiles qui stockent des informations de localisation sur lesdits terminaux mobiles, et des informations d'enregistrement qui sont prédéfinies par les utilisateurs desdits terminaux mobiles, en tant qu'informations de terminaux mobiles ;
une étape d'extraction de terminaux cibles de distribution consistant à recevoir des informations de désignation pour désigner les terminaux mobiles vers lesquels les informations doivent être distribuées, ces informations de désignation étant transmises par un terminal de fourniture d'informations, et à extraire les terminaux mobiles qui correspondent aux conditions des informations de désignation reçues sur la base des informations de terminaux mobiles acquises dans ladite étape d'acquisition d'informations de terminaux mobiles ; et
une étape d'attribution d'adresse multidiffusion consistant à attribuer une adresse multidiffusion aux terminaux cibles de distribution extraits dans ladite étape d'extraction de terminaux cibles de distribution.

8. Procédé d'attribution d'adresse multidiffusion selon la revendication 6 ou 7, dans lequel lesdits moyens de stockage d'informations de terminaux mobiles stockent, en tant que lesdites informations de localisation, des informations de zone de localisation indiquant les zones dans lesquelles se trouvent lesdits terminaux mobiles.

9. Procédé de distribution d'informations destiné à effectuer des transmissions d'informations multidiffusion vers une pluralité de terminaux mobiles, ces informations étant retransmises par une pluralité de stations de base, dans lequel des moyens de stockage d'informations de terminaux mobiles sont constitués pour stocker à l'avance, en tant qu'informations de terminaux mobiles, des informations de localisation sur les terminaux mobiles, et des informations d'enregistrement qui sont prédéfinies par les utilisateurs des terminaux mobiles, et dans lequel ledit procédé de distribution d'informations comprend :
une étape d'extraction de terminaux cibles de distribution consistant à recevoir des informations de désignation pour désigner les terminaux mobiles vers lesquels les informations doivent être distribuées, ces informations de désignation étant transmises par un terminal de fourniture d'informations, et à extraire les terminaux mobiles qui correspondent aux conditions des informations de désignation reçues sur la base des informations de terminaux mobiles stockées par lesdits moyens de stockage d'informations de terminaux mobiles ;
une étape d'attribution d'adresse multidiffusion consistant à attribuer une adresse multidiffusion aux terminaux cibles de distribution extraits dans ladite étape d'extraction de terminaux cibles de distribution ;
une étape de traitement de signal de recherche de personnes consistant à transmettre un signal de recherche de personnes, auquel est ajoutée l'adresse multidiffusion attribuée dans ladite étape d'attribution d'adresse multidiffusion, vers les zones dans lesquelles se trouvent les terminaux cibles de distribution extraits dans ladite étape d'extraction de terminaux cibles de distribution, et consistant à recevoir des signaux de confirmation de participation qui sont transmis par lesdits terminaux mobiles via lesdites stations de base en réponse audit signal de recherche de personnes et qui indiquent la participation à un groupe multidiffusion ; et
une étape de distribution d'informations consistant à distribuer des informations, via les stations de base retransmettant lesdits signaux de confirmation de participation, vers les terminaux mobiles transmettant lesdits signaux de confirmation de participation, lorsque des signaux de confirmation de participation sont reçus dans ladite étape de traitement de signal de recherche de personnes.

10. Procédé de distribution d'informations destiné à assurer des transmissions d'informations multidiffusion vers une pluralité de terminaux mobiles, ces informations étant retransmises par une pluralité de stations de base, comprenant :
une étape d'acquisition d'informations de terminaux mobiles consistant à acquérir des informations de terminaux mobiles en demandant des informations de terminaux mobiles aux moyens de stockage d'informations de terminaux mobiles qui stockent des informations de localisation sur lesdits terminaux mobiles, et des informations d'enregistrement qui sont prédéfinies par les utilisateurs desdits terminaux mobiles, en tant qu'informations de terminaux mobiles ;
une étape d'extraction de terminaux cibles de distribution consistant à recevoir des informations de désignation pour désigner les terminaux mobiles vers lesquels les informations doivent être distribuées, ces informations de désignation étant transmises par un terminal de fourniture d'informations, et à extraire les terminaux mobiles qui correspondent aux conditions des informations de désignation reçues sur la base des informations de terminaux mobiles acquises dans ladite étape d'acquisition d'informations de terminaux mobiles ;
une étape d'attribution d'adresse multidiffusion consistant à attribuer une adresse multidiffusion aux terminaux cibles de distribution extraits dans ladite étape d'extraction de terminaux cibles de distribution ;
une étape de traitement de signal de recherche de personnes consistant à transmettre un signal de recherche de personnes, auquel est ajoutée l'adresse multidiffusion attribuée dans ladite étape d'attribution d'adresse multidiffusion, vers les zones dans lesquelles se trouvent les terminaux cibles de distribution extraits dans ladite étape d'extraction de terminaux cibles de distribution, et consistant à recevoir des signaux de confirmation de participation qui sont transmis par lesdits terminaux mobiles via lesdites stations de base en réponse audit signal de recherche de personnes et qui indiquent la participation à un groupe multidiffusion ; et
une étape de distribution d'informations consistant à distribuer des informations, via les stations de base retransmettant lesdits signaux de confirmation de participation, vers les terminaux mobiles transmettant lesdits signaux de confirmation de participation, lorsque des signaux de confirmation de participation sont reçus dans ladite étape de traitement de signal de recherche de personnes.

11. Programme d'attribution d'adresse multidiffusion qui, afin d'attribuer une adresse multidiffusion pour mettre en oeuvre des transmissions d'informations multidiffusion vers une pluralité de terminaux mobiles, ces informations étant retransmises par une pluralité de stations de base, fait fonctionner l'ordinateur comme :
des moyens de stockage d'informations de terminaux mobiles pour stocker des informations de localisation sur les terminaux mobiles, et des informations d'enregistrement qui sont prédéfinis par les utilisateurs des terminaux mobiles, en tant qu'informations de terminaux mobiles ;
des moyens d'extraction de terminaux cibles de distribution pour recevoir des informations de désignation pour désigner les terminaux mobiles auxquels les informations doivent être distribuées, ces informations de désignation étant transmises par un terminal de fourniture d'informations, et pour extraire les terminaux mobiles qui correspondent aux conditions des informations de désignation reçues sur la base des informations de terminaux mobiles stockées par les moyens de stockage d'informations de terminaux mobiles ; et
des moyens d'attribution d'adresse multidiffusion pour attribuer une adresse multidiffusion aux terminaux cibles de distribution extraits par lesdits moyens d'extraction de terminaux cibles de distribution.

12. Programme d'attribution d'adresse multidiffusion qui, afin d'attribuer une adresse multidiffusion pour mettre en oeuvre des transmissions d'informations multidiffusion vers une pluralité de terminaux mobiles, ces informations étant retransmises par une pluralité de stations de base, fait fonctionner l'ordinateur comme :
des moyens d'acquisition d'informations de terminaux mobiles pour acquérir des informations de terminaux mobiles en demandant les informations de terminaux mobiles aux moyens de stockage d'informations de terminaux mobiles qui stockent des informations de localisation sur lesdits terminaux mobiles, et des informations d'enregistrement qui sont prédéfinies par les utilisateurs desdits terminaux mobiles, en tant qu'informations des terminaux mobiles ;
des moyens d'extraction de terminaux cibles de distribution pour recevoir des informations de désignation pour désigner les terminaux mobiles auxquels des informations doivent être distribuées, ces informations de désignation étant transmises par un terminal de fourniture d'informations, et pour extraire les terminaux mobiles qui correspondent aux conditions des informations de désignation reçues sur la base des informations de terminaux mobiles acquises par lesdits moyens d'acquisition d'informations de terminaux mobiles ; et
des moyens d'attribution d'adresse multidiffusion pour attribuer une adresse multidiffusion aux terminaux cibles de distribution extraits par lesdits moyens d'extraction de terminaux cibles de distribution.

13. Programme d'attribution d'adresse multidiffusion selon la revendication 11 ou 12, demandant auxdits moyens de stockage d'informations de terminaux mobiles de stocker, en tant que lesdites informations de localisation, des informations de zone de localisation indiquant les zones dans lesquelles se trouvent les terminaux mobiles.

14. Programme de distribution d'informations qui, afin de mettre en oeuvre des transmissions d'informations multidiffusion vers une pluralité de terminaux mobiles, ces informations étant retransmises par une pluralité de stations de base, fait fonctionner un ordinateur comme :
des moyens de stockage d'informations de terminaux mobiles pour stocker des informations de localisation sur les terminaux mobiles, et des informations d'enregistrement qui sont prédéfinies par les utilisateurs des terminaux mobiles, en tant qu'informations de terminaux mobiles ;
des moyens d'extraction de terminaux cibles de distribution pour recevoir des informations de désignation pour désigner les terminaux mobiles auxquels les informations doivent être distribuées, ces informations de désignation étant transmises par un terminal de fourniture d'informations, et pour extraire les terminaux mobiles qui correspondent aux conditions des informations de désignation reçues des moyens de stockage d'informations de terminaux mobiles ;
des moyens d'attribution d'adresse multidiffusion pour attribuer une adresse multidiffusion aux terminaux cibles de distribution extraits par lesdits moyens d'extraction de terminaux cibles de distribution ;
des moyens de traitement de signal de recherche de personnes pour transmettre un signal de recherche de personnes, auquel est ajoutée une adresse multidiffusion attribuée par ledit dispositif d'attribution d'adresse multidiffusion, vers les zones dans lesquelles se trouvent les terminaux cibles de distribution extraits par lesdits moyens d'extraction de terminaux cibles de distribution, et pour recevoir des signaux de confirmation de participation qui sont transmis par lesdits terminaux mobiles via lesdites stations de base en réponse audit signal de recherche de personnes et qui indiquent la participation à un groupe multidiffusion ; et
des moyens de distribution d'informations, qui, lorsque des signaux de confirmation de participation sont reçus par lesdits moyens de traitement de signal de recherche de personnes, distribuent des informations, via les stations de base retransmettant lesdits signaux de confirmation de participation, vers les terminaux mobiles transmettant lesdits signaux de confirmation de participation.

15. Programme de distribution d'informations qui, afin d'assurer des transmissions d'informations multidiffusion vers une pluralité de terminaux mobiles, ces informations étant retransmises par une pluralité de stations de base, fait fonctionner un ordinateur comme :
des moyens d'acquisition d'informations de terminaux mobiles pour acquérir des informations de terminaux mobiles en demandant des informations de terminaux mobiles aux moyens de stockage d'informations de terminaux mobiles qui stockent des informations de localisation sur lesdits terminaux mobiles, et des informations d'enregistrement qui sont prédéfinies par les utilisateurs desdits terminaux mobiles, en tant qu'informations des terminaux mobiles ;
des moyens d'extraction de terminaux cibles de distribution pour recevoir des informations de désignation pour désigner les terminaux mobiles auxquels les informations doivent être distribuées, ces informations de désignation étant transmises par un terminal de fourniture d'informations, et pour extraire les terminaux mobiles qui correspondent aux conditions des informations de désignation reçues sur la base des informations de terminaux mobiles stockées par les moyens de stockage d'informations de terminaux mobiles ;
des moyens d'attribution d'adresse multidiffusion pour attribuer une adresse multidiffusion aux terminaux cibles de distribution extraits par lesdits moyens d'extraction de terminaux cibles de distribution ;
des moyens de traitement de signal de recherche de personnes pour transmettre un signal de recherche de personnes, auquel est ajoutée une adresse multidiffusion attribuée par ledit dispositif d'attribution d'adresse multidiffusion, vers les zones dans lesquelles se trouvent les terminaux cibles de distribution extraits par lesdits moyens d'extraction de terminaux cibles de distribution, et pour recevoir des signaux de confirmation de participation qui sont transmis par lesdits terminaux mobiles via lesdites stations de base en réponse audit signal de recherche de personnes et qui indiquent la participation à un groupe multidiffusion ; et
des moyens de distribution d'informations, qui, lorsque des signaux de confirmation de participation sont reçus par lesdits moyens de traitement de signal de recherche de personnes, distribuent des informations, via les stations de base retransmettant lesdits signaux de confirmation de participation, vers les terminaux mobiles transmettant lesdits signaux de confirmation de participation.

16. Support d'enregistrement lisible par ordinateur, qui enregistre le programme d'attribution d'adresse multidiffusion selon l'une quelconque des revendications 11 à 13, ou le programme de distribution d'informations selon l'une quelconque des revendications 14 et 15.
